# EUROPEAN PATENT SPECIFICATION

(11) **EP 3 059 081 B1**
(45) Date of publication and mention of the grant of the patent: **24.01.2024**
(21) Application number: 16156668.2
(22) Date of filing: 22.02.2016
(51) Int. Cl.: B32B 18/00, C04B 37/00, C04B 35/80

(54) **NANOFIBER INTERLAMINAR LAYER FOR CERAMIC MATRIX COMPOSITES**
INTERLAMINARE NANOFASERSCHICHT VON KERAMISCHEN VERBUNDWERKSTOFFEN
COUCHE INTERLAMINAIRE DE NANOFIBRES POUR COMPOSITES À MATRICE CÉRAMIQUE

(30) Priority: 23.02.2015 US 201514628600
(43) Date of publication of application: 24.08.2016
(73) Proprietor: RTX Corporation, Farmington, CT 06032 (US)
(72) Inventor: SCHMIDT, Wayde, Pomfret Center, CT 06259 (US)
(74) Representative: Dehns

(56) References cited:
- WO-A1-2014/013165
- WO-A2-2008/118794
- FR-A1- 2 993 494
- US-A1- 2003 003 286

## Description

### BACKGROUND

Composite materials, such as ceramic matrix composites (CMCs), can be utilized in high-temperature applications. CMCs may have multiple layers of fibers that are disposed in a ceramic matrix. For example, fiber layers are stacked and then infiltrated with a ceramic material to form the matrix.

FR 2 993 494 A1 discloses a method of assembling together by brazing two parts made of ceramic matrix composite (CMC) material.

US 2003/003286 A1 discloses a friction or sliding body, comprising at least first and second composite materials reinforced with fiber bundles and containing a ceramic matrix.

### SUMMARY

A method of forming a component according to the present disclosure includes depositing nanofibers onto at least one of first and second layers, the first and second layers each including ceramic-based fibers arranged in a ceramic-based matrix material, forming a prepreg, and bonding the first and second layers and the nanofibers to form a component, characterised in that:
said nanofibers are arranged exclusively between said first and second layers and do not infiltrate said layers,
the method comprises curing the prepreg to bond said layers and nanofibers, said first and second layers are bonded via said nanofibers,
the depositing step includes depositing nanofibers directly onto at least one of the first and second layers, and
the depositing step includes electrospinning or centrifugal spinning.

In another example according to the previous embodiment, the method further comprises arranging the first and second layers in an alternating manner with the nanofibers.

In another example according to any of the previous embodiments, subsequent the depositing step, the nanofibers cover greater than approximately 20% of a surface area of the first or second layers.

In another example according to any of the previous embodiments, the method further comprises densifying the component by at least one of chemical vapor infiltration, preceramic polymer infiltration (PIP), and glass transfer molding (GTM).

These and other features may be best understood from the following drawings and specification.

### BRIEF DESCRIPTION OF THE DRAWINGS

Figure 1A schematically shows a ceramic matrix composite component.
Figure 1B schematically shows a cross-section of the composite component of Figure 1A.
Figure 1C schematically shows a cross-section of an alternate composite component.
Figure 2 shows a method of forming a ceramic matrix composite component.

### DETAILED DESCRIPTION

Ceramic matrix composite (CMC) materials can include multiple layers or 'plies' of ceramic-based fibers that are disposed in a ceramic-based matrix. The layers are bonded together along interlaminar regions. The strength of this bond is known as the "interlaminar strength." If the interlaminar strength is insufficient in certain applications, "delamination" can occur, whereby the layers come apart from one another. One way to improve interlaminar strength is to increase the surface area of the bond between layers in the interlaminar region. One way to increase surface area available for bonding is to increase surface roughness. In that regard, the CMC component disclosed herein includes nanofibers deposited in the interlaminar region.

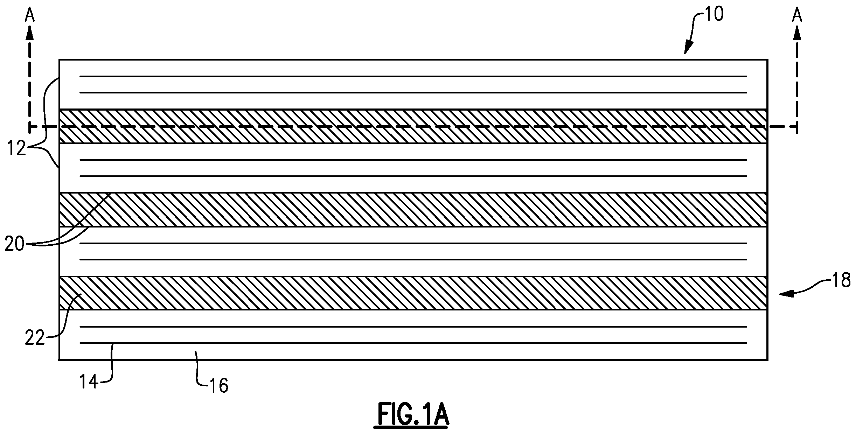

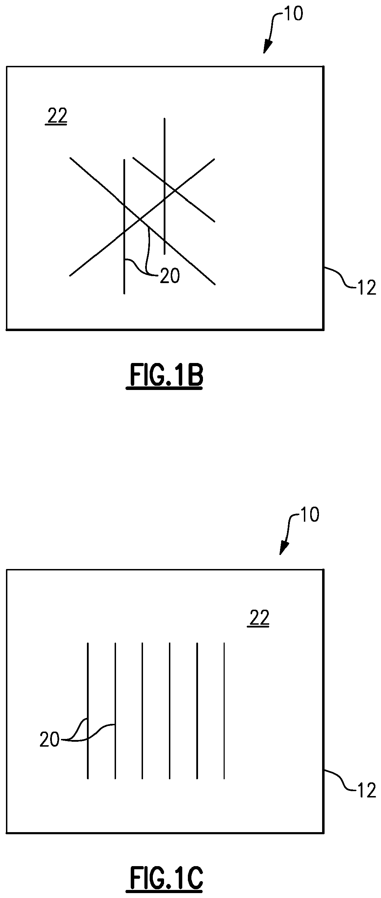

Figure 1A shows a CMC component 10. Figure 1B schematically shows a cross-section of the component 10 along the line A-A. Although the component 10 is depicted with a generic shape, it is to be understood that the component can be formed in a desired geometry, such as but not limited to a gas turbine engine airfoil, blade, vane, or seal. However, the present disclosure is not limited to engine articles and the examples herein can also be applied to other articles that are used in high-temperature environments, either in stationary or motion (i.e. rotational) applications.

The component 10 includes layers 12. Each of the layers 12 includes ceramic-based fibers 14 in a ceramic-based matrix material 16. The matrix material 16 can be, for example, a polymer-derived ceramic material. The layers 12 meet at an interlaminar interface 18. The interlaminar interface 18 includes nanofibers 20. The nanofibers 20 are deposited onto surfaces 22 of the CMC layers 12. In one example, the diameter of the nanofibers 20 is between approximately 10 and 500 nanometers and the length of the nanofibers 20 is between approximately 50 and 1,000,000 nanometers.

The nanofibers 20 are nonwoven and can be arranged, for example, in a random orientation, as is shown in Figure 1B. In another example, nanofibers 20 are predominantly aligned in one or more unidirectional orientations, as is shown schematically in Figure 1C. The nanofibers 20 cover a fraction of a surface area of the CMC layer 12. In one example, the fraction is greater than approximately 20%.

In further examples, the nanofibers 20 are carbide-, nitride-, oxycarbide-, oxynitride-, carbonitride-, silicate-, boride-, phosphide-, or oxide-based fibers. In still further examples, the fibers are fully crystalline, partially crystalline or predominantly amorphous or glassy. In one particular example, the nanofibers 20 are silicon carbide fibers.

In a further example, the amount of the nanofibers 20 and fibers 14 are controlled relative to one another to promote interlaminar adhesion. For example, a ceramic matrix composite would preferably have a volume fraction of fibers 14 in the composite of between 15% and 70%, whereas an amount of nanofibers 20 is preferably between about 0.25% and 10% by volume fraction relative to the composite. In one example, a ratio of the amount of fibers 14 in each layer to the amount of nanofibers 20 is between approximately 1.5%and 280% by [volume fraction/volume fraction]. More particularly, the ratio is between approximately 5% and 100% by [volume fraction/volume fraction].

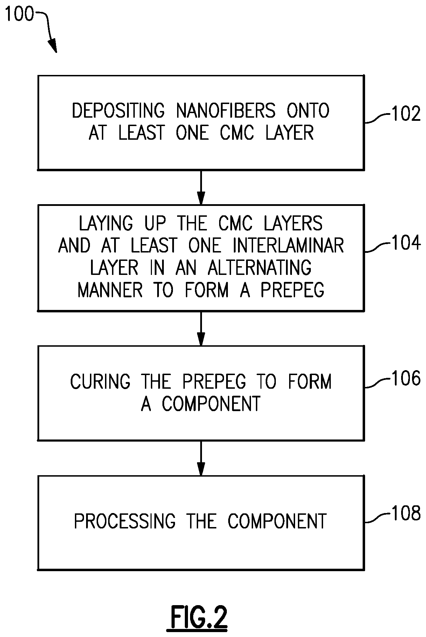

Figure 2 shows a method 100 of forming a ceramic matrix composite component 10. In step 102, nanofibers 20 are deposited on at least one of a plurality of CMC layers 12. That is, the nanofibers 20 are exclusively at the interlaminar region 18 adjacent surfaces 22 of the CMC layers 12 and do not infiltrate the CMC layers 12. In step 104, the plurality of CMC layers 12 are layed up to form a prepreg such that the nanofibers 20 are arranged between two of the plurality of CMC layers 12. That is, the nanofibers 20 are arranged in an alternating manner with the CMC layers 12. In step 106, the prepreg is cured to bond the CMC layers 12 and nanofibers 20 to form a CMC component 10. In optional step 108, the component is processed. For example, the component 10 is densified by a process such as chemical vapor infiltration (CVI), preceramic polymer infiltration (PIP), glass transfer molding (GTM), or another suitable method.

Prior to step 102, each of the CMC layers 12 may be prepared by, for example, arranging fibers 14 in a desired pattern and infiltrating the fiber 14 arrangement with a matrix material 16. In some examples, such as but not limited to those where polymer-derived ceramic matrix materials 16 are used, the matrix material 16 can be cured subsequent to the infiltration step to form the CMC layer 12.

Nanofibers 20 are deposited directly onto the at least one CMC layer 12, by electrospinning or centrifugal spinning. In electrospinning, nanofibers 20 are drawn by applying an electrostatic charge (e.g. high voltage potential) across a gap between a solution or liquid melt containing the nanofiber precursor and the substrate upon which the nanofiber will be deposited. In centrifugal spinning, nanofibers 20 are drawn by centrifugal force provided by spinning from either a solution or a semisolid or liquid material (as in a melt). Regardless of the deposition method, the nanofibers can be provided in an oriented architecture by moving nanofiber deposition heads in a 'back- and-forth' or oscillating manner, or in a predominantly nonwoven, or random, architecture when such control methods are not used. Multilayers of oriented and random nanofiber mats are also contemplated.

In step 106, curing the prepreg bonds the CMC layers 12 together via the nanofibers 20. Nanofibers 20 increase the surface roughness (and thereby the surface area) of the CMC layers 12 available for bonding. The increased bond surface area increases the strength of the overall interlaminar bonds, which improves the strength of the CMC component 10 and mitigates delamination. The curing process can include, for example, heat and/or pressure treatment, the application of ultraviolet light or electromagnetic radiation, pyrolysis, etc., depending on the type of fibers 14, the type of matrix material 16, and the type of nanofibers 20. The curing process may also include forming the component 10 into a desired shape.

In one example, the curing step 106 can be performed in multiple steps. For instance, a first curing step can be performed subsequent to laying up the prepreg in step 104 to partially cure the prepreg. Then, the prepreg can be assembled with other prepregs to form a component 10, and a second curing step can be performed.

## Claims

1. A method of forming a component, comprising:
depositing nanofibers onto at least one of first and second layers, the first and second layers each including ceramic-based fibers arranged in a ceramic-based matrix material, forming a prepreg; and
bonding the first and second layers and the nanofibers to form a component;
**characterized in that**:
said nanofibers are arranged exclusively between said first and second layers and do not infiltrate said layers;
the method comprises curing the prepreg to bond said layers and nanofibers;
said first and second layers are bonded via said nanofibers;
the depositing step includes depositing nanofibers directly onto at least one of the first and second layers, and
the depositing step includes electrospinning or centrifugal spinning.

2. The method of claim 1 further comprising arranging the first and second layers in an alternating manner with the nanofibers.

3. The method of claim 1 or claim 2, wherein subsequent the depositing step, the nanofibers cover greater than 20% of a surface area of the first or second layers.

4. The method of any one of the preceding claims, further comprising densifying the component by at least one of chemical vapor infiltration, preceramic polymer infiltration (PIP), and glass transfer molding (GTM).

## Patentansprüche

1. Verfahren zum Bilden einer Komponente, umfassend:
Abscheiden von Nanofasern auf mindestens einer von einer ersten und einer zweiten Schicht, wobei die erste und die zweite Schicht jeweils Fasern auf Keramikbasis beinhalten, die in einem Matrixmaterial auf Keramikbasis angeordnet sind und ein Prepreg bilden; und
Verbinden der ersten und der zweiten Schicht und der Nanofasern, um eine Komponente zu bilden; **dadurch gekennzeichnet, dass**:
die Nanofasern ausschließlich zwischen der ersten und der zweiten Schicht angeordnet sind und die Schichten nicht infiltrieren;
das Verfahren Aushärten des Prepregs umfasst, um die Schichten und Nanofasern zu verbinden;
die erste und die zweite Schicht über die Nanofasern verbunden sind;
der Abscheidungsschritt direktes Abscheiden von Nanofasern auf mindestens einer der ersten und der zweiten Schicht beinhaltet und
der Abscheidungsschritt Elektrospinnen oder Zentrifugalspinnen beinhaltet.

2. Verfahren nach Anspruch 1, ferner umfassend abwechselndes Anordnen der ersten und der zweiten Schicht mit den Nanofasern.

3. Verfahren nach Anspruch 1 oder Anspruch 2, wobei die Nanofasern im Anschluss an den Abscheidungsschritt mehr als 20 % eines Oberflächenbereichs der ersten oder der zweiten Schicht bedecken.

4. Verfahren nach einem der vorhergehenden Ansprüche, ferner umfassend Verdichten der Komponente durch mindestens eines von chemischer Dampfinfiltration, Infiltration mit präkeramischen Polymeren (PIP) und Glas-Transfer-Molding (GTM).

## Revendications

1. Procédé de formation d'un composant, comprenant :
le dépôt de nanofibres sur au moins une des première et seconde couches, les première et seconde couches comportant chacune des fibres à base de céramique disposées dans un matériau matriciel à base de céramique, formant un préimprégné ; et
la liaison des première et seconde couches et des nanofibres pour former un composant ; **caractérisé en ce que** :
lesdites nanofibres sont disposées exclusivement entre lesdites première et seconde couches et n'infiltrent pas lesdites couches ;
le procédé comprend le durcissement du préimprégné pour lier lesdites couches et nanofibres ;
lesdites première et seconde couches sont liées via lesdites nanofibres ;
l'étape de dépôt comporte le dépôt de nanofibres directement sur au moins l'une des première et seconde couches, et
l'étape de dépôt comporte un électrofilage ou un filage centrifuge.

2. Procédé selon la revendication 1, comprenant en outre la disposition des première et seconde couches de manière alternée avec les nanofibres.

3. Procédé selon la revendication 1 ou la revendication 2, dans lequel suite à l'étape de dépôt, les nanofibres couvrent plus de 20 % d'une surface de la première ou de la seconde couche.

4. Procédé selon l'une quelconque des revendications précédentes, comprenant en outre la densification du composant par au moins une infiltration chimique en phase vapeur, une infiltration de polymère précéramique (PIP) et un moulage par transfert de verre (GTM).
